# EUROPÄISCHE PATENTSCHRIFT

(11) **EP 2 963 221 B1**
(45) Veröffentlichungstag und Bekanntmachung des Hinweises auf die Patenterteilung: **16.09.2020**
(21) Anmeldenummer: 15001663.2
(22) Anmeldetag: 03.06.2015
(51) Int. Cl.: E05F 15/40, E05F 15/42, E05F 15/47

(54) **SCHWENKTÜRKONSTRUKTION FÜR EIN FAHRZEUG, VORZUGSWEISE EINEN OMNIBUS**
PIVOTING DOOR STRUCTURE FOR A VEHICLE, PREFERABLY A BUS
CONSTRUCTION DE PORTE PALIÈRE POUR UN VÉHICULE, DE PRÉFÉRENCE POUR UN OMNIBUS

(30) Priorität: 03.07.2014 DE 102014009855
(43) Veröffentlichungstag der Anmeldung: 06.01.2016
(60) Teilanmeldung: 19158989.4
(73) Patentinhaber: MAN Truck & Bus SE, 80995 München (DE)
(72) Erfinder: Deufel, Thomas, 80539 München (DE); Schilling, Fabrice, 07546 Gera (DE); Schöller, Michael, 82166 Gräfelfing (DE)
(74) Vertreter: v. Bezold & Partner Patentanwälte - PartG mbB

(56) Entgegenhaltungen:
- EP-A1- 1 286 478
- EP-A1- 1 658 450
- EP-A2- 0 215 316
- EP-A2- 1 227 208
- DE-U1-202008 004 592
- US-A- 4 133 365
- US-A- 6 108 976

## Beschreibung

Die Erfindung betrifft eine Schwenktürkonstruktion für ein Kraftfahrzeug, vorzugsweise einen Omnibus. Die Schwenktürkonstruktion ist als z. B. zweiflüglige Innenschwenktürkonstruktion ausgeführt.

EP 1 286 478 A1 bezieht sich auf ein taktiles Sensorsystem, das ein taktiles Sensorelement mit zugehörigem Sensorstromkreis, einen zugeordneten Transponderbaustein mit zugehöriger Transponderantenne, eine Auswerteeinheit mit zugehöriger auswerteseitiger Antenne und einen drahtlosen Übertragungskanal zur Energieübertragung von der Auswerteeinheit zum Transponderbaustein und zur Signalübertragung vom Transponderbaustein zur Auswerteeinheit umfasst. Dabei sind der Transponderbaustein und die Transponderantenne im Inneren des taktilen Sensorelementes eingebaut, und/oder es ist wenigstens eine Beeinflussungsantenne vorgesehen, die in den Sensorstromkreis eingeschleift ist und deren Wirkbereich mit demjenigen des drahtlosen Übertragungskanals überlappt. Zum Stand der Technik können ferner die eine Falttür betreffende US 4 133 365 A und die DE 20 2008 004592 U1 und die EP 1 227 208 A2 genannt werden.

Innenschwenktürkonstruktionen für Omnibusse umfassen in der Regel zwei verschwenkbare Türblätter und eine Führungsmechanik für die Türblätter. Derartige Innenschwenktürkonstruktionen sind üblicherweise mit sogenannten Druckwellenschaltern ausgestattet. Die Druckwellenschalter dienen dazu, zu erfassen, ob die Türblätter während eines Schließvorgangs auf ein Hindernis (z. B. ein- oder aussteigende Fahrgäste) treffen. Sofern ein Hindernis getroffen wird, kann der Schließvorgang der Türblätter gestoppt oder reversiert werden. In der Praxis sind die Druckwellenschalter üblicherweise türblattextern angeordnet. Nachteilhaft daran ist insbesondere der erforderliche Platzbedarf und die Länge der Druckleitung, so dass Steuersignale verzögert verarbeitet und umgewandelt werden.

Eine Aufgabe der Erfindung ist es, eine verbesserte und/oder alternative Schwenktürkonstruktion für ein Kraftfahrzeug, vorzugsweise einen Omnibus, zu schaffen.

Diese Aufgabe wird mit den Merkmalen des unabhängigen Anspruchs gelöst. Vorteilhafte Weiterbildungen der Erfindung können den Unteransprüchen und der folgenden Beschreibung entnommen werden.

Die Erfindung betrifft eine Schwenktürkonstruktion mit den Merkmalen des unabhängigen Anspruchs.

Die Erfindung schafft eine Schwenktürkonstruktion für ein Kraftfahrzeug, vorzugsweise einen Omnibus, insbesondere einen Stadtbus. Die Schwenktürkonstruktion umfasst zumindest ein zum Öffnen und Schließen verschwenkbares Türblatt, zumindest eine Führungsmechanik für das Türblatt und zumindest einen Schalter (z. B. ein Erfassungselement) für das Türblatt, nämlich einen Druckwellenschalter. Der Druckwellenschalter dient dazu, zu erfassen, ob das Türblatt während eines Schließvorgangs auf ein Hindernis (z. B. Fahrgast oder ein unerwünschter Gegenstand) trifft. Es ist möglich, dass die Schwenktürkonstruktion so ausgeführt ist, dass, wenn ein Hindernis mittels des Schalters erfasst wird, der Schließvorgang des Türblatts gestoppt und/oder reversiert wird.

Die Schwenktürkonstruktion zeichnet sich dadurch aus, dass der Schalter an dem Türblatt festgelegt (z. B. montiert, angebracht, türblattfest, etc.) ist und zweckmäßig gemeinsam mit dem Türblatt verschwenkbar ist.

Dadurch kann eine verbesserte, zweckmäßig torsionsarme Steuerkabelführung für den Schalter ermöglicht werden und zudem das Erfassen, ob das Türblatt während eines Schließvorgangs auf ein Hindernis trifft, verbessert werden, insbesondere wegen der ermöglichten verkürzten Steuerkabelführung.

Die Führungsmechanik umfasst eine türblattseitige Führungsmechanik (z. B. eine Schienen-Kulissenstein-Konstruktion oder eine Schienen-Rollen-Konstruktion). Die Schwenktürkonstruktion zeichnet sich somit vorzugsweise dadurch aus, dass sie mit einer türblattseitigen Führungsmechanik versehen ist und einen integrierten Schalter aufweist.

Der Schalter ist vorzugsweise lateral benachbart zu oder in der türblattseitigen Führungsmechanik angeordnet, insbesondere darin integriert. Bei einer besonders bevorzugten Ausführungsform ist der Schalter in eine türblattseitige Führungsschiene (z. B. Rollen- oder Kulissensteinführung) integriert.

Die türblattseitige Führungsmechanik erstreckt sich zweckmäßig entlang des oberen Endes des Türblatts.

Der Schalter ist vorzugsweise an einem oberen Eckbereich des Türblatts insbesondere türblattfest angebracht.

Die türblattseitige Führungsmechanik umfasst vorzugsweise eine z. B. im Wesentlichen U-förmige Führungsschiene. Der Schalter ist vorzugsweise lateral benachbart zu oder in der Führungsschiene angeordnet. Die Führungsschiene dient vorzugsweise zum Führen z. B. einer Rolle oder eines Kulissensteins.

Die Führungsmechanik umfasst darüber hinaus eine türrahmenseitige Führungsmechanik für das Türblatt.

Die türrahmenseitige Führungsmechanik kann ebenfalls eine Führungsschiene umfassen, die zum Führen einer Rolle oder eines Kulissensteins dient.

Es ist möglich, dass die türblattseitige Führungsmechanik und die türrahmenseitige Führungsmechanik über ein zweckmäßig verfahrbares Verbindungselement miteinander verbunden sind.

Es ist möglich, dass das Verbindungselement unten den Schalter trägt und zweckmäßig oben das geführte Führungselement (z. B. Rolle oder Kulissenstein) der türrahmenseitigen Führungsmechanik trägt. Ferner kann das Verbindungselement zweckmäßig unten das geführte Führungselement (z. B. Rolle oder Kulissenstein) der türblattseitigen Führungsmechanik tragen.

Der Schalter ist mit einem Steuerkabel verbunden. Das Steuerkabel dient zur Verbindung des Schalters mit einer Türsteuereinheit.

Es ist möglich, dass das Steuerkabel sich durch zumindest eines von Folgendem auszeichnet: Es verläuft abschnittsweise in der türblattseitigen Führungsmechanik, es ist an dem geführten Führungselement der türrahmenseitigen Führungsmechanik montiert, es verläuft durch eine Öffnung (z. B. eine Nut) am oder im geführten Führungselement der türrahmenseitigen Führungsmechanik, es verläuft durch eine Öffnung in der türrahmenseitigen Führungsmechanik (insbesondere der Führungsschiene), es verläuft entlang der Führungsschiene der türrahmenseitigen Führungsmechanik, es verläuft entlang des Verbindungselements und/oder es erstreckt sich durch eine Durchgangsöffnung in dem Verbindungselement.

Die türblattseitige Führungsmechanik umfasst vorzugsweise eine Führungsschiene und eine darin geführte Rolle oder einen darin geführten Kulissenstein, so dass die türblattseitige Führungsmechanik zweckmäßig als Schienen-Kulissenstein-Konstruktion oder Schienen-Rollen-Konstruktion bezeichnet werden kann.

Die türrahmenseitige Führungsmechanik umfasst zweckmäßig ebenfalls eine Führungsschiene und einen darin geführten Kulissenstein oder eine darin geführte Rolle, so dass die türrahmenseitige Führungsmechanik zweckmäßig ebenfalls als Schienen-Kulissenstein-Konstruktion oder Schienen-Rollen-Konstruktion bezeichnet werden kann.

Die Schwenktürkonstruktion ist als z. B. zweiflüglige (zweiblättrige) oder einflüglige (einblättrige) Innenschwenktürkonstruktion ausgeführt.

Zu erwähnen ist, dass die türblattseitige Führungsmechanik zweckmäßig mit dem Türblatt mitverschwenkbar ist und/oder türblattfest angebracht ist.

Zu erwähnen ist ferner, dass die türrahmenseitige Führungsmechanik zweckmäßig nicht mit dem Türblatt mitverschwenkbar ist.

Die türrahmenseitige Führungsmechanik ist als Linearführung ausgeführt.

Zu erwähnen ist darüber hinaus, dass das Merkmal "Schalter" im Rahmen der Erfindung vorzugsweise allgemein Erfassungsmittel umfasst, die dazu dienen, zu erfassen, ob das Türblatt während eines Schließvorgangs auf ein Hindernis trifft.

Die Erfindung ist nicht auf eine Schwenktürkonstruktion beschränkt, sondern umfasst auch ein Kraftfahrzeug, vorzugsweise einen Omnibus, insbesondere einen Stadtbus, mit einer Schwenktürkonstruktion wie hierin beschrieben.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht einer Schwenktürkonstruktion von außen gemäß einer Ausführungsform der Erfindung,
- Figur 2: zeigt eine perspektivische Detailansicht eines Teils der Schwenktürkonstruktion der Figur 1 von innen,
- Figur 3: zeigt eine perspektivische Detailansicht eines Teils der Schwenktürkonstruktion der Figuren 1 und 2 mit zu Darstellungszwecken weggelassenem Türblatt,
- Figur 4: zeigt eine perspektivische Detailansicht eines Teils der Schwenktürkonstruktion der Figuren 1 bis 3,
- Figur 5: zeigt eine andere perspektivische Detailansicht eines Teils der Schwenktürkonstruktion der Figuren 1 bis 4 von innen, und
- Figur 6: zeigt eine perspektivische Ansicht der Schwenktürkonstruktion der Figuren 1 bis 5 von innen.

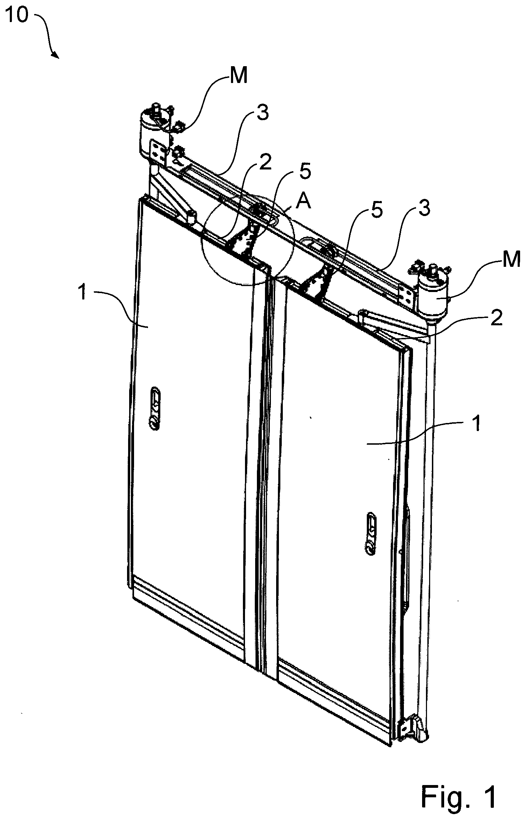

Figur 1 zeigt eine Schwenktürkonstruktion 10 für ein Kraftfahrzeug, vorzugsweise einen Stadtbus, gemäß einer Ausführungsform der Erfindung. Die Schwenktürkonstruktion 10 ist als Innenschwenktürkonstruktion ausgeführt und umfasst zwei zum Öffnen nach innen und zum Schließen nach außen verschwenkbare Türblätter 1.

Die zwei Türblätter 1 sind im Wesentlichen spiegelsymmetrisch angeordnet und baugleich ausgeführt. Die Schwenktürkonstruktion 10 wird deshalb unter Bezugnahme auf nur ein Türblatt 1 beschrieben.

Die Schwenktürkonstruktion 10 umfasst eine türblattseitige (Türblatt-feste) Führungsmechanik 2 und eine türrahmenseitige (Türrahmen-feste) Führungsmechanik 3 für das Türblatt 1. Die türblattseitige Führungsmechanik 2 ist oben an dem Türblatt 1 angebracht, während die türrahmenseitige Führungsmechanik 3 am Türrahmen oder einer anderen nicht öffenbaren Kraftfahrzeug-Struktur (nicht gezeigt) angebracht ist. Das Türblatt 1 kann über einen Türblatt-Antriebs-Motor M, die türrahmenseitige Führungsmechanik 3, ein weiter unten beschriebenes verfahrbares Verbindungselement 5 und die türblattseitige Führungsmechanik 3 verschwenkt und dadurch geöffnet und geschlossen werden.

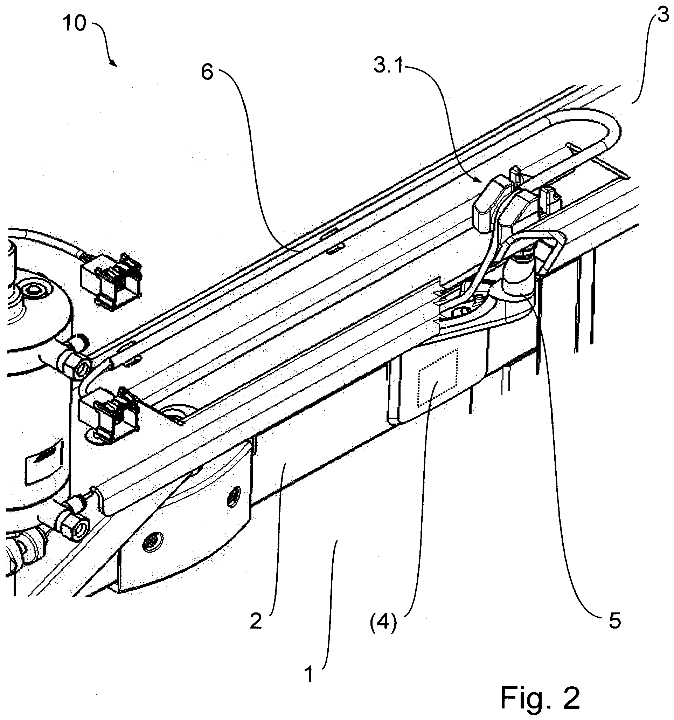

Figur 2 zeigt eine perspektivische Detailansicht des Teils A der Schwenktürkonstruktion 10 der Figur 1 von innen.

Bezugszeichen 4 zeigt auf einen in Figur 2 verdeckten, schematisch dargestellten Schalter 4, nämlich einen Druckwellenschalter, der dazu dient, zu erfassen, ob das Türblatt 1 während eines Schließvorgangs auf ein Hindernis (z. B. einen Fahrgast oder einen unerwünschten oder blockierenden Gegenstand) trifft. Der Schalter 4 kann an sich ein bekannter Druckwellenschalter sein und zur Umwandlung eines pneumatischen Signals in ein elektrisches Signal dienen. Sofern ein Hindernis mittels des Schalters 4 erfasst wird, kann der Schließvorgang des Türblatts 1 gestoppt und/oder reversiert werden, so dass der Schalter 4 einen Teil einer Einklemmschutzsicherung darstellt.

Eine Besonderheit der Schwenktürkonstruktion 10 ist, dass der Schalter 4 an dem Türblatt 1 festgelegt ist und somit in das Türblatt 1 integriert ist, um mit dem Türblatt 1 zu verschwenken. Der Schalter 4 ist hierzu in die türblattseitige Führungsmechanik 2 integriert. Die Führungsmechanik 2 umfasst eine Führungsschiene und ein darin geführtes Führungselement (z. B. eine Rolle oder einen Kulissenstein, nicht gezeigt). Besonders vorteilhaft ist, wenn der Schalter 4 in die Führungsschiene integriert ist. Es sind allerdings ebenso Ausführungsformen möglich, in denen der Schalter 4 außerhalb, z. B. lateral benachbart zu der Führungsschiene, angeordnet ist.

In Figur 2 ist ferner die türrahmenseitige Führungsmechanik 3 zu sehen. Die Führungsmechanik 3 umfasst eine Führungsschiene und einen darin geführten Kulissenstein 3.1, der allerdings auch als Rolle ausgeführt sein könnte.

Die türblattseitige Führungsmechanik 2 und die türrahmenseitige Führungsmechanik 3 sind über das Verbindungselement 5 miteinander verbunden. Das Verbindungselement 5 trägt zweckmäßig oben den Kulissenstein 3.1 und zweckmäßig unten den Schalter 4. Das Verbindungselement 5 trägt ferner zweckmäßig unten das (nicht gezeigte) geführte Führungselement (z. B. Rolle oder Kulissenstein) der türblattseitigen Führungsmechanik 2.

Der Schalter 4 ist mit einem Steuerkabel 6 verbunden, das den Schalter 4 mit einer Türsteuereinheit verbindet, mittels der der Motor M steuerbar ist.

Das Steuerkabel 6 ist an dem geführten Kulissenstein 3.1 festgelegt und erstreckt sich zweckmäßig z. B. durch eine Öffnung, Nut, etc. an oder in dem Kulissenstein 3.1. Das Steuerkabel 6 erstreckt sich zudem entlang der Führungsschiene der türrahmenseitigen Führungsmechanik 3, durch die Führungsschiene der türrahmenseitigen Führungsmechanik 3 hindurch und über das Verbindungselement 5 hin zu dem in der türblattseitigen Führungsmechanik 2 angeordneten Schalter 4.

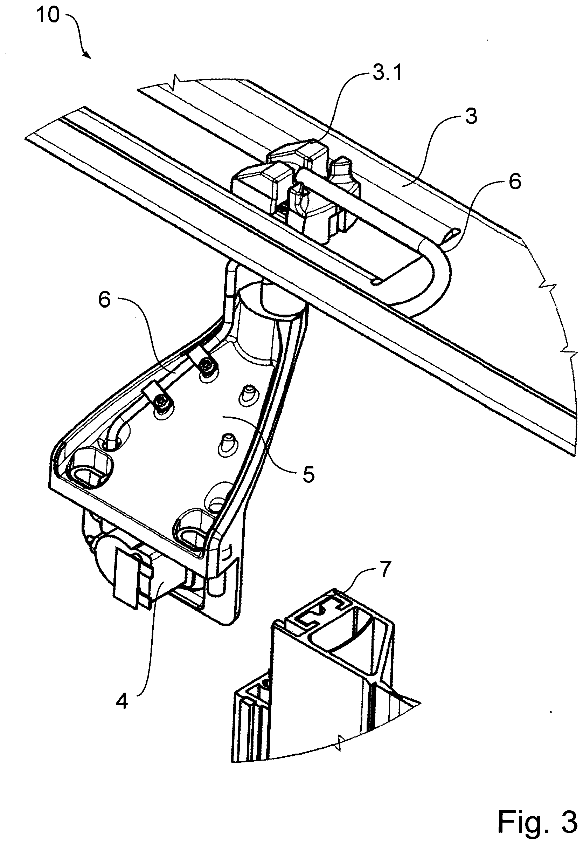

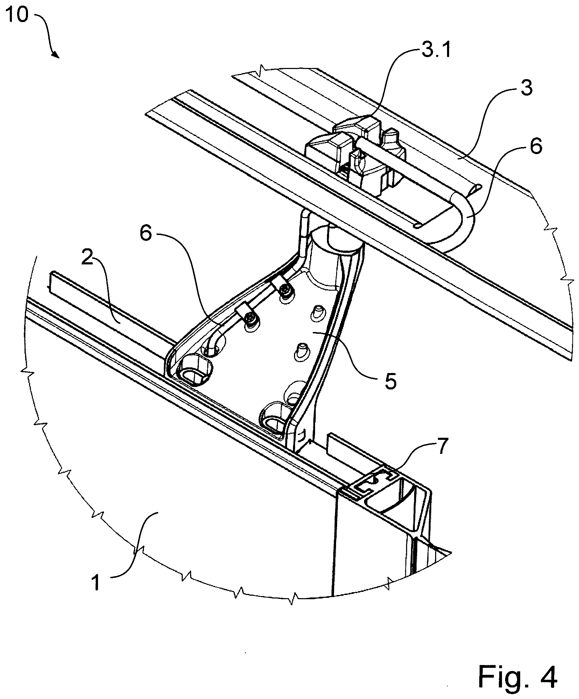

Die Figuren 3 und 4 zeigen Detailansichten eines Teils der Schwenktürkonstruktion 10 der Figuren 1 und 2, einmal mit zu Darstellungszwecken weggelassenem Türblatt 1 (Figur 3) und einmal mit Türblatt (Figur 4).

Den Figuren 3 und 4 kann nochmals entnommen werden, dass die türblattseitige Führungsmechanik 2 und die türrahmenseitige Führungsmechanik 3 über das Verbindungselement 5 miteinander verbunden sind.

Den Figuren 3 und 4 kann ferner entnommen werden, dass das Steuerkabel 6 an dem Verbindungselement 5 befestigt ist, entlang des Verbindungselements 5 verläuft und sich durch eine Durchlassöffnung durch das Verbindungselement 5 hin zu dem Schalter 4 erstreckt.

Das Bezugszeichen 7 kennzeichnet eine Hauptschließkante, insbesondere ein Abschlussprofil, zur Erzeugung einer Druckwelle für den Druckwellenschalter 4. Die Hauptschließkante kann an sich gemäß Stand der Technik ausgeführt sein.

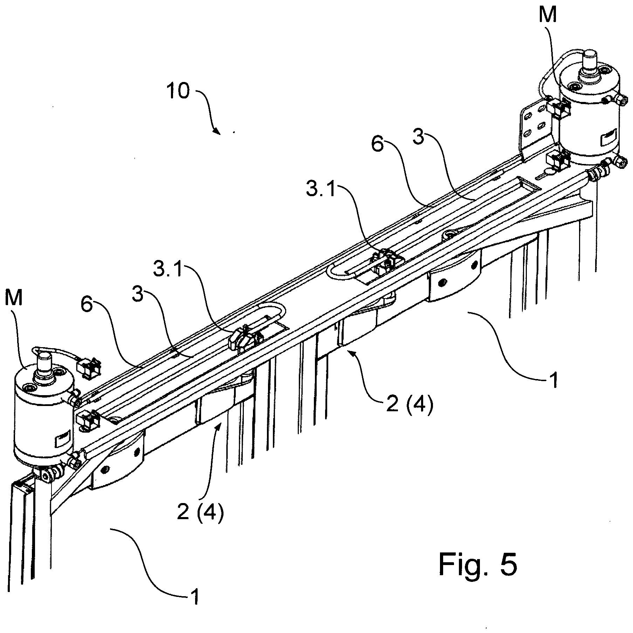

Figur 5 zeigt eine perspektivische Detailansicht der Schwenktürkonstruktion 10 der Figuren 1 bis 4.

Figur 5 kann insbesondere nochmals die torsionsoptimierte Verlegung des Steuerkabels 6 entnommen werden, nämlich von dem türblatt-fest angeordneten Schalter 4 aus, über das Verbindungselement 5 durch die Führungsschiene der türrahmenseitigen Führungsmechanik 3 hindurch zu dem Kulissenstein 3.1 und entlang Führungsschiene der türrahmenseitigen Führungsmechanik 3 hin zu der Türsteuereinheit.

Darüber hinaus kann Figur 5 die Integration des Schalters 4 (in Figur 5 nicht direkt zu sehen) in das Türblatt 1, insbesondere in die türblattseitige Führungsmechanik 2, entnommen werden.

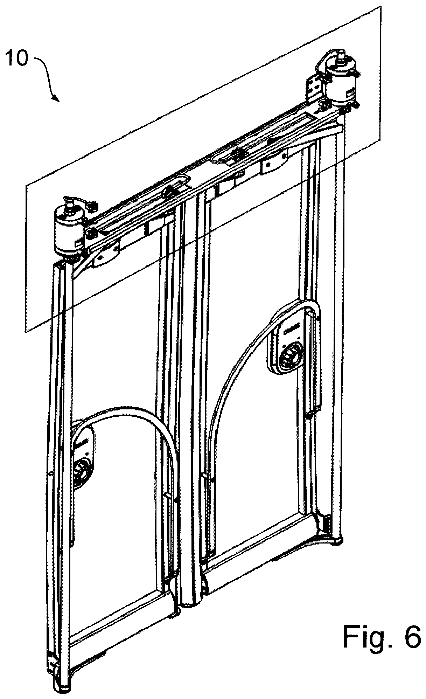

Figur 6 ist eine perspektivische Ansicht der Schwenktürkonstruktion der Figuren 1 bis 5 von innen, zu Darstellungszwecken allerdings ohne Bezugszeichen.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 1: Türblatt
- 2: Türblattseitige Führungsmechanik
- 3: Türrahmenseitige Führungsmechanik
- 3.1: Geführtes Führungselement (z. B. Rolle oder Kulissenstein) der türrahmenseitigen Führungsmechanik
- 4: Schalter, nämlich Druckwellenschalter
- 5: Verfahrbares Verbindungselement
- 6: Steuerkabel
- 7: Hauptschließkante, Druckwellenerzeuger
- 10: Schwenktürkonstruktion, insbesondere Innenschwenktürkonstruktion
- M: Motor zum Verschwenken des Türblatts

## Patentansprüche

1. Schwenktürkonstruktion (10) für ein Kraftfahrzeug, vorzugsweise einen Omnibus, wobei die Schwenktürkonstruktion (10) eine Innenschwenktürkonstruktion ist, mit zumindest einem verschwenkbaren Türblatt (1), zumindest einer Führungsmechanik (2, 3) für das Türblatt (1) und zumindest einem Schalter (4), nämlich einem Druckwellenschalter, zum Erfassen, ob das Türblatt (1) während eines Schließvorgangs auf ein Hindernis trifft, wobei der Schalter (4) an dem Türblatt (1) festgelegt und mit dem Türblatt (1) verschwenkbar ist, wobei die Führungsmechanik eine türrahmenseitige Führungsmechanik (3) und eine türblattseitige Führungsmechanik (2) umfasst, **dadurch gekennzeichnet, dass** die türrahmenseitige Führungsmechanik (3) als Linearführung ausgeführt ist und der Schalter (4) mit einem Steuerkabel (6) verbunden ist, und dass
- das Steuerkabel (6) durch eine Öffnung an oder in einem geführten Führungselement (3.1) der türrahmenseitigen Führungsmechanik (3) verläuft, wobei das Steuerkabel (6) an dem geführten Führungselement (3.1) der türrahmenseitigen Führungsmechanik (3) montiert ist, wobei das Steuerkabel (6) durch eine Öffnung in einer Führungsschiene der türrahmenseitigen Führungsmechanik (3) verläuft, wobei das Steuerkabel (6) sich entlang der Führungsschiene der türrahmenseitigen Führungsmechanik (3) erstreckt und wobei die Führungsschiene der türrahmenseitigen Führungsmechanik (3) zum Führen einer Rolle oder eines Kulissensteins dient, und/oder
- das Steuerkabel (6) sich durch eine Durchgangsöffnung in einem verfahrbaren Verbindungselement (5) erstreckt, das die türblattseitige Führungsmechanik (2) und die türrahmenseitige Führungsmechanik (3) miteinander verbindet, wobei das Verbindungselement (5) unten den Schalter (4) trägt und oben das geführte Führungselement (3.1) der türrahmenseitigen Führungsmechanik (3) trägt, und wobei das Steuerkabel (6) sich entlang des Verbindungselements (5) erstreckt.

2. Schwenktürkonstruktion (10) nach Anspruch 1, **dadurch gekennzeichnet, dass** der Schalter (4) lateral benachbart zu oder in der türblattseitigen Führungsmechanik (2) angeordnet ist.

3. Schwenktürkonstruktion (10) nach Anspruch 1 oder 2, **dadurch gekennzeichnet, dass** die türblattseitige Führungsmechanik (2) sich entlang des oberen Endes des Türblatts (1) erstreckt.

4. Schwenktürkonstruktion (10) nach einem der vorhergehenden Ansprüche, **dadurch gekennzeichnet, dass** die türblattseitige Führungsmechanik (2) eine vorzugsweise U-förmige Führungsschiene umfasst und der Schalter (4) lateral benachbart zu oder in der Führungsschiene angeordnet ist.

5. Schwenktürkonstruktion (10) nach einem der vorhergehenden Ansprüche, **dadurch gekennzeichnet, dass** das Steuerkabel (6) abschnittsweise in der türblattseitigen Führungsmechanik (2) verläuft.

6. Schwenktürkonstruktion (10) nach einem der vorhergehenden Ansprüche, **dadurch gekennzeichnet, dass** die Schwenktürkonstruktion (10) eine zweiflüglige Innenschwenktürkonstruktion ist.

7. Schwenktürkonstruktion (10) nach einem der vorhergehenden Ansprüche, **dadurch gekennzeichnet, dass** der Schalter (4) in einem oberen Eckbereich des Türblatts (2) türblattfest angeordnet ist.

8. Kraftfahrzeug, vorzugsweise Omnibus, mit einer Schwenktürkonstruktion (10) nach einem der vorhergehenden Ansprüche.

## Claims

1. A swinging door structure (10) for a motor vehicle, preferably a bus, wherein the swinging door structure (10) is an inward swinging door structure, having at least one pivotable door leaf (1), at least one guide mechanism (2, 3) for the door leaf (1) and at least one switch (4), namely a pressure wave switch, for detecting whether the door leaf (1) strikes an obstacle during a closing operation, wherein the switch (4) is secured to the door leave (1) and can be pivoted with the door leaf (1), wherein the guide mechanism comprises a door frame-side guide mechanism (3) and a door leaf-side guide mechanism (2), **characterized in that** the door frame-side guide mechanism (3) is configured as a linear guide, and the switch (4) is connected to a control cable (6), and **in that**
- the control cable (6) runs through an opening on or in a guided guide element (3.1) of the door frame-side guide mechanism (3), wherein the control cable (6) is mounted on the guided guide element (3.1) of the door frame-side guide mechanism (3), wherein the control cable (6) runs through an opening in a guide rail of the door frame-side guide mechanism (3), wherein the control cable (6) extends along the guide rail of the door frame-side guide mechanism (3), and wherein the guide rail of the door frame-side guide mechanism (3) serves for guiding a roller or a slide block, and/or
- the control cable (6) extends through a through-opening in a movable connection element (5) which interconnects the door leaf-side guide mechanism (2) and the door frame-side guide mechanism (3), wherein the connection element (5) carries the switch (4) at the bottom and carries the guided guide element (3.1) of the door frame-side guide mechanism (3) at the top, and wherein the control cable (6) extends along the connection element (5) .

2. The swinging door structure (10) according to Claim 1, **characterized in that** the switch (4) is arranged laterally adjacent to or in the door leaf-side guide mechanism (2).

3. The swinging door structure (10) according to Claim 1 or 2, **characterized in that** the door leaf-side guide mechanism (2) extends along the upper end of the door leaf (1).

4. The swinging door structure (10) according to one of the preceding claims, **characterized in that** the door leaf-side guide mechanism (2) comprises a preferably U-shaped guide rail, and the switch (4) is arranged laterally adjacent to or in the guide rail.

5. The swinging door structure (10) according to one of the preceding claims, **characterized in that** the control cable (6) runs in certain portions in the door leaf-side guide mechanism (2).

6. The swinging door structure (10) according to one of the preceding claims, **characterized in that** the swinging door structure (10) is a two-leaf inward swinging door structure.

7. The swinging door structure (10) according to one of the preceding claims, **characterized in that** the switch (4) is arranged fixed on the door leaf in an upper corner region of the door leaf (2).

8. A motor vehicle, preferably a bus, having a swinging door structure (10) according to one of the preceding claims.

## Revendications

1. Construction de porte pivotante (10) pour un véhicule automobile, de préférence un autobus, la construction de porte pivotante (10) étant une construction de porte pivotante interne, comprenant au moins un vantail de porte (1) pivotant, au moins un mécanisme de guidage (2, 3) pour le vantail de porte (1) et au moins un commutateur (4), à savoir un commutateur à ondes de pression, destiné à détecter si le vantail de porte (1) heurte un obstacle pendant une opération de fermeture, le commutateur (4) étant fixé au vantail de porte (1) et pouvant pivoter avec le vantail de porte (1), le mécanisme de guidage comportant un mécanisme de guidage côté cadre de porte (3) et un mécanisme de guidage côté vantail de porte (2), **caractérisée en ce que** le mécanisme de guidage côté cadre de porte (3) est réalisé sous la forme d'un guidage linéaire et le commutateur (4) est relié à un câble de commande (6), et **en ce que**
- le câble de commande (6) suit un tracé à travers une ouverture ou dans un élément de guidage (3.1) guidé du mécanisme de guidage côté cadre de porte (3), le câble de commande (6) étant monté sur l'élément de guidage (3.1) guidé du mécanisme de guidage côté cadre de porte (3), le câble de commande (6) suivant un tracé à travers une ouverture dans un rail de guidage du mécanisme de guidage côté cadre de porte (3), le câble de commande (6) s'étendant le long du rail de guidage du mécanisme de guidage côté cadre de porte (3) et le rail de guidage du mécanisme de guidage côté cadre de porte (3) servant à guider un galet ou un coulisseau, et/ou
- le câble de commande (6) s'étend à travers une ouverture de passage dans un élément de liaison (5) mobile, qui relie ensemble le mécanisme de guidage côté vantail de porte (2) et le mécanisme de guidage côté cadre de porte (3), l'élément de liaison (5) portant le commutateur (4) en bas et portant en haut l'élément de guidage (3.1) guidé du mécanisme de guidage côté cadre de porte (3), et le câble de commande (6) s'étendant le long de l'élément de liaison (5).

2. Construction de porte pivotante (10) selon la revendication 1, **caractérisée en ce que** le commutateur (4) est disposé adjacent latéralement au mécanisme de guidage côté vantail de porte (2) ou dans celui-ci.

3. Construction de porte pivotante (10) selon la revendication 1 ou 2, **caractérisée en ce que** le mécanisme de guidage côté vantail de porte (2) s'étend le long de l'extrémité supérieure du vantail de porte (1).

4. Construction de porte pivotante (10) selon l'une des revendications précédentes, **caractérisée en ce que** le mécanisme de guidage côté vantail de porte (2) comporte un rail de guidage de préférence en forme de U et le commutateur (4) est disposé adjacent latéralement au rail de guidage ou dans celui-ci.

5. Construction de porte pivotante (10) selon l'une des revendications précédentes, **caractérisée en ce que** le câble de commande (6), dans certaines portions, suit un tracé dans le mécanisme de guidage côté vantail de porte (2) .

6. Construction de porte pivotante (10) selon l'une des revendications précédentes, **caractérisée en ce que** la construction de porte pivotante (10) est une construction de porte pivotante interne à deux vantaux.

7. Construction de porte pivotante (10) selon l'une des revendications précédentes, **caractérisée en ce que** le commutateur (4) est disposé dans une zone de coin supérieure du vantail de porte (2).

8. Véhicule automobile, de préférence autobus, équipé d'une construction de porte pivotante (10) selon l'une des revendications précédentes.
